(19) Europäisches Patentamt
European Patent Office
Office européen des brevets

(11) EP 0 998 085 B1

(12) EUROPEAN PATENT SPECIFICATION

(45) Date of publication and mention of the grant of the patent:
28.11.2007 Bulletin 2007/48

(51) Int Cl.:
*H04L 27/26* (2006.01)

(21) Application number: 98308903.8

(22) Date of filing: 30.10.1998

(54) **Frequency correction in an OFDM (orthogonal frequency division multiplex) receiver**

Frequenzkorrektur in einem OFDM (orthogonale Frequenzmultiplexierung) Empfänger

Correction de fréquence dans un récepteur de type MFDO (multiplexage par division en fréquences orthogonales)

(84) Designated Contracting States:
DE FR GB

(43) Date of publication of application:
03.05.2000 Bulletin 2000/18

(73) Proprietor: FUJITSU TEN LIMITED
Kobe-shi,
Hyogo (JP)

(72) Inventors:
• Takayama, Kazuo
Hyogo-ku,
Kobe-shi,
Hyogo (JP)
• Nagami, Masaaki
Hyogo-ku,
Kobe-shi,
Hyogo (JP)

(74) Representative: Skone James, Robert Edmund
Gill Jennings & Every LLP
Broadgate House
7 Eldon Street
London EC2M 7LH (GB)

(56) References cited:
EP-A- 0 869 648

• DATABASE WPI Section EI, Week 9844 Derwent Publications Ltd., London, GB; Class U23, AN 98-513040 XP002096374 & JP 10 224320 A (VICTOR CO OF JAPAN) , 21 August 1998
• PATENT ABSTRACTS OF JAPAN vol. 098, no. 013, 30 November 1998 & JP 10 209999 A (NEC CORP), 7 August 1998
• PATENT ABSTRACTS OF JAPAN vol. 097, no. 012, 25 December 1997 & JP 09 224015 A (MITSUBISHI ELECTRIC CORP), 26 August 1997

**Description**

The present invention relates to an orthogonal frequency division multiplex (OFDM) mode receiver, more particularly relates to a receiver which corrects a frequency deviation between a receiving side and a transmitting side when receiving signals.

An orthogonal frequency division multiplex mode receiver is used for receiving a digital audio broadcast (DAB) and uses an orthogonal multicarrier modulation mode suitable for mobile communications. In the receiver, demodulation is carried out by analyzing the frequency of the multicarrier (FFT).

As will be explained in detail later by using the drawings, information such as an audio signal is divided and multiplexed on a few hundred of orthogonal subcarriers. When a receiver receives this, the amplitude becomes unstable in the following cases.

(A) A frequency synchronization error occurs in the receiver (deviation of receiving frequency).
(B) Time synchronization error occurs in the receiver (fast fourier transform (FFT) is carried out from symbol to symbol).
(C) Distortion occurs in the receiver.
(D) Multipath interference occurs.
(E) The input is weak.

Among these, the causes of amplitude variations of (A) to (C) can be utilized as decision signals for controlling the receiver since the state of reception can be improved by control at the receiver side.

On the other hand, it is possible to detect the frequency deviation by utilizing a pilot symbol, but a pilot symbol is inserted only once in one frame, so there is the problem that a long time is taken for the correction. Further, when there is no pilot symbol, correction can not be performed.

In a receiver for detecting frequency deviation without utilizing such a pilot symbol, dips occur in the subcarrier when there is multipath disturbance. When the delay time of a reflected wave is $\tau$, a frequency interval of the dip becomes $1/\tau$. Usually, this delay time $\tau$ is equal to 40 $\mu$sec or 25 kHz converted to frequency. In this way, as pointed out by the cause of the case of (D), amplitude variations of subcarriers occur. The amplitude variations of subcarriers due to a multipath disturbance in the case of the above (D) and the amplitude variations of subcarriers due to a weak input in the case of the above (E) are not due to frequency deviation in the receiver. For this reason, when correcting a frequency due to amplitude variation due to only the case of the above (A), there is a problem that it is not possible to correct the frequency in the case of (A) if it is not possible to discriminate the amplitude variations due to the cases of (D) and (E)

JP-A-10209999 describes an automatic frequency control system in which level detectors are provided to extract only the carrier waves of highest and lowest frequencies among the carrier waves of OFDM modulation waves and to detect an output average level. The average levels are compared and a control voltage is output to a local signal generator which generates a local signal for mixing with the incoming transmitted signal.

Accordingly, in consideration with the above problem, an object of the present invention is to provide an orthogonal frequency division multiplex mode receiver capable of quickly correcting a frequency by detecting amplitude variations due to frequency synchronization error on the receiver side by discriminating when variation is due to a multipath disturbance and when variation is due to a weak input.

To attain the above object, the present invention provides an orthogonal frequency division multiplexing receiver for receiving a signal obtained by phase-modulating a plurality of orthogonal subcarriers, provided with:

a voltage-controlled oscillator for generating a local carrier for reproducing a baseband signal from a received signal;
a frequency analyzing unit for finding amplitudes and phase values of subcarriers by analyzing the frequency of said baseband signal; and
a frequency correction unit for detecting the amplitude difference occurring between subcarriers by an inter-symbol interference due to the frequency deviation of the local carrier relative to the transmitting side frequency and correcting the frequency deviation of said local carrier to give the minimum amplitude difference, wherein said frequency correction unit is adapted to compare the amplitudes of adjoining subcarriers by using the sum of the differences for each two adjoining subcarriers and detect said amplitude difference therebetween, to find a measure of the phase difference between adjoining subcarriers, to detect said frequency deviation of said local carrier based on both said detected amplitude difference and said measure of the phase difference, and to control the frequency of said local carrier so as to give the minimum amplitude difference depending on the magnitude of said detected frequency deviation.

The above object and features of the present invention will be more apparent from the following description of the preferred embodiments given with reference to the accompanying drawings, wherein:

Fig. 1 is a view of an example of an orthogonal frequency division multiplex mode receiver according to the present invention;

Fig. 2 is a view for explaining a subcarrier;

Fig. 3 is a view for explaining a relationship of the subcarrier, a phase value, and a frequency deviation;

Fig. 4 is a flow chart for explaining an example of a control operation of a frequency correction unit 16 of Fig. 1;

Fig. 5 is a view for explaining a comparison of a subcarrier level of step S4 of Fig. 4;

Fig. 6 is a view for explaining a correlation of an inter-symbol distance in detail;

Fig. 7 is a view of an example for correcting frequency deviation based on a center position of distribution of a frequency spectrum for the subcarrier;

Fig. 8 is a view for explaining an example for determining the center position of the spectrum distribution of Fig. 7;

Fig. 9 is a view of a concrete example of determining the center position of the frequency spectrum distribution of Fig. 8;

Fig. 10 is a view of another concrete example of determining the center position of the spectrum distribution of Fig. 8;

Fig. 11 is a view for explaining an example of a case where there is a specific point in the spectrum distribution;

Fig. 12 is a view of another concrete example for determining the center position of the frequency spectrum distribution of Fig. 8;

Fig. 13 is a view of a modification of the concrete example of Fig. 12;

Fig. 14 is a view of a modification of the concrete example of Fig. 13;

Fig. 15 is a view of a combination of Fig. 13 and Fig. 14;

Fig. 16 is a view for explaining a correction amount of the frequency deviation as an example of Fig. 13;

Fig. 17 is a view for explaining measurement of the subcarrier level in a center area of the frequency spectrum at the present;

Fig. 18 is a view for explaining a case where there are specific points near a null symbol carrier and a symbol carrier;

Fig. 19 is a view for explaining the subcarrier;

Fig. 20 is a view for explaining a relationship between a transmitter and a receiver;

Fig. 21 is a view for explaining a baseband data frame (for example 24 ms); and

Fig. 22 is a view for explaining a subcarrier receiving multipath disturbance.

Before describing the embodiments of the present invention, the related art and the disadvantages therein will be described with reference to the related figures.

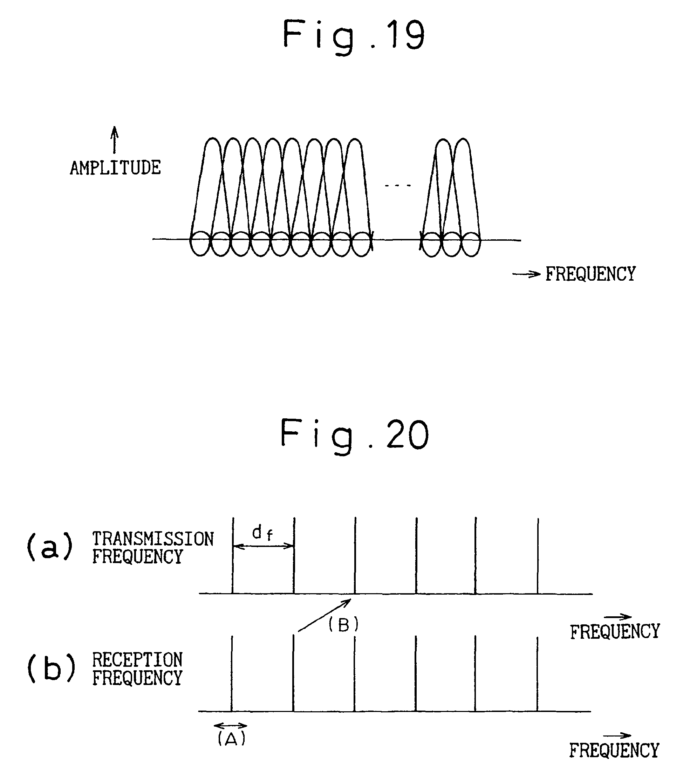

Figure 19 is a view for explaining subcarriers. As shown in the figure, information such as an audio signal is divided and multiplexed on a few hundred of orthogonal subcarriers. When phase shift keying modulation (PSK), quadrature phase shift keying modulation (QPSK), $\pi/4$ QPSK, and other phase modulation where the envelope is constant is carried out for each subcarrier, the amplitudes of the subcarriers are always constant when they are transmitted. When the receiver receives this, as already explained, the amplitude becomes unstable in the following cases.

(A) A frequency synchronization error occurs in the receiver (deviation of receiving frequency).

(B) A time synchronization error occurs in the receiver (fast Fourier transform (FFT) is carried out from symbol to symbol).

(C) A distortion occurs in the receiver.

(D) Multipath interference occurs.

(E) The input is weak.

Among them, the causes of amplitude variations of (A) to (C) can be utilized as decision signals for controlling the receiver since the state of reception can be improved by control at the receiver side.

Figure 20 is a view for explaining the relationship of the frequency between the transmitter and the receiver. In order to secure orthogonalization of subcarriers, it is required that the precision of synchronization of the frequency be such that the frequency deviations between the transmitter and the receiver is 2% or less of the frequency interval of the subcarriers (df), for example, 1 kHz as shown in the figure. When this requirement is not satisfied, amplitude variations will occur in the subcarriers as will be explained later. As shown in the figure, in the case of the above (A), the subcarrier varies within df, while in the case of the above (B), it varies exceeding df.

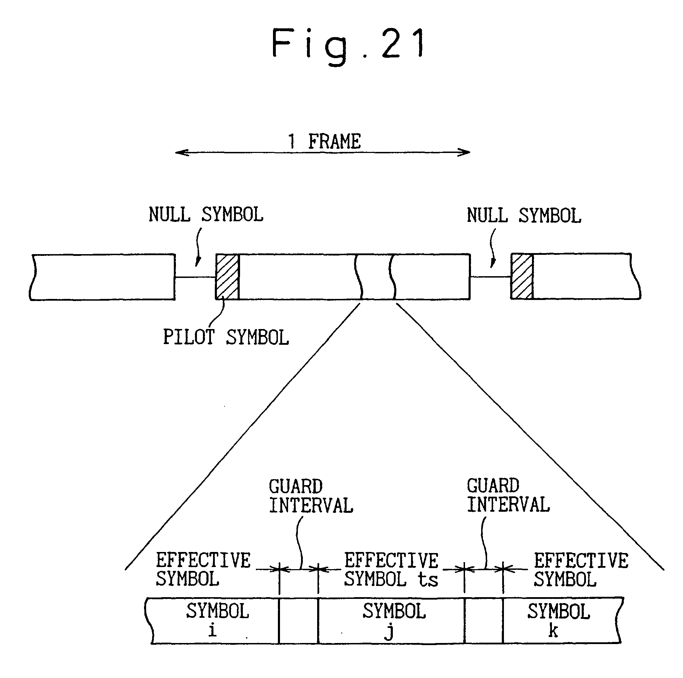

Figure 21 is a view for explaining a baseband data frame (for example 24 ms). As shown in the figure, pilot symbols modulated with fixed phase values for establishing synchronization are provided at the head of each data frame punctuated by null symbols. Note that the frequency analysis is carried out for every effective symbol in the normal mode.

As already explained, it is possible to detect frequency deviation by utilizing this pilot symbol, but a pilot symbol is inserted only once in one frame, so has the above problem that a long time is taken for the correction. Further, when there is no pilot symbol, correction cannot be carried out.

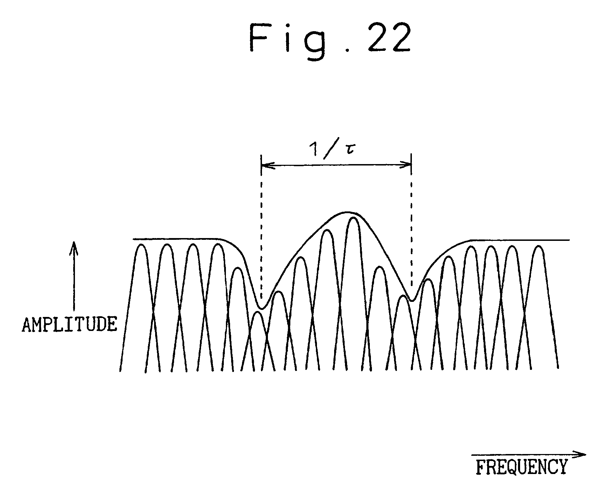

Figure 22 is a view for explaining subcarriers receiving multipath disturbance. As shown in the figure, dips occur in a subcarrier when receiving multipath disturbance. When the delay time of the reflected wave is $\tau$, a frequency

interval of the dip becomes $1/\tau$. Usually, this delay time $\tau$ is equal to 40 $\mu$sec or 25 kHz converted to frequency. In this way, as pointed out by the cause of the case of (D), amplitude variations of subcarriers occur. Amplitude variations of subcarriers due to multipath disturbance in the case of this (D) and amplitude variations of subcarriers due to weak input in the case of the above (E) are not due to frequency deviation in the receiver. For this reason, when correcting a frequency due to amplitude variation due to only the case of the above (A), there is a problem that it is not possible to correct the frequency due to the case of (A) if it is not possible to discriminate amplitude variations due to the cases of (D) and (E).

In consideration with the above problem, the present invention provides an orthogonal frequency division multiplex mode receiver capable of quickly correcting the frequency by detecting amplitude variations due to frequency synchronization error on the receiver side by discriminating when variation is due to multipath disturbance and when variation is due to weak input. The structure thereof will be explained in detail below.

To solve the above problem, the present invention provides an orthogonal frequency division multiplex mode receiver for receiving signals obtained by modulating phases of a plurality of orthogonal subcarriers, provided with a voltage-controlled oscillator for generating a main carrier for reproducing a baseband signal from a received signal; a frequency analyzing unit for finding the level and phase value of the subcarrier by analyzing the frequency of the baseband signal and decoding the codes; and a frequency correction unit for detecting a level difference produced between adjoining subcarriers by an inter-symbol interference due to the frequency deviation of the main carrier and correcting the frequency deviation of the main carrier to give a minimum level difference. By the above means, it has become possible to quickly correct the frequency by discriminating amplitude variations of adjoining subcarriers due to frequency synchronization error, time synchronization error, and distortion on the receiver side from amplitude variations due to multipath disturbance or weak input.

Below, an explanation will be given of embodiments of the present invention by referring to the drawings.

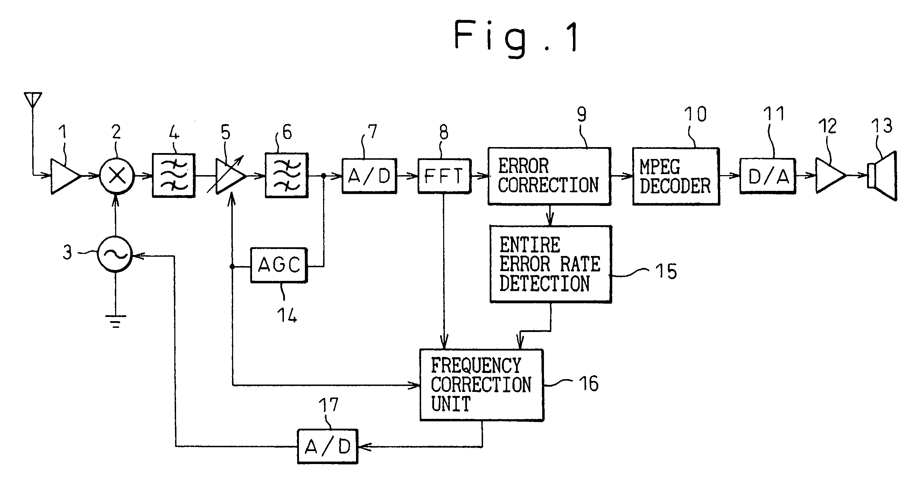

Figure 1 is a view of an example of an orthogonal frequency division multiplex mode receiver according to the present invention. As shown in the figure, the orthogonal frequency division multiplex mode receiver is mounted on a mobile station and provided with a high frequency amplifier 1 for amplifying the received signal at a high frequency, a mixer 2 for transforming the transmission frequency to the baseband signal by using the main carrier, a voltage-controlled oscillator 3 for supplying the main carrier to the mixer 2, a band pass filter 4 which is connected to the mixer 2 and removes an unrequired frequency, a variable gain amplifier 5 connected to the band pass filter 4, a band pass filter 6 connected to the variable gain amplifier 5, an analog to digital converter 7 (A/D converter) for converting the output signal of the band pass filter 6 from an analog to digital format, a fast fourier transforming unit (FFT) 8 which is connected to the A/D converter 7, analyzes the frequency of the digital signal to find the level of the subcarrier and the phase at which the subcarrier is modulated, and decodes this phase to codes, an error correction unit 9 which is connected to the fast fourier transforming unit 8 and performs error correction processing, a Moving Picture Experts Group (MPEG) decoder 10 connected to the error correction unit 9, a digital to analog converter 11 (D/A converter) for converting the output signal of the MPEG decoder 10 from a digital to analog format, a power amplifier 12 for amplifying the analog power, and a speaker 13 for transforming the power signal to sound. Further, an automatic gain control circuit (AGC) 14 receives as its input an output signal indicating a field strength from the band pass filter 6 and controls the gain of the variable gain amplifier 5 at the time of a weak input.

An entire error rate detection unit 15 detects the entire error rate generated per frame shown in Fig. 21 based on the error correction information from the error correction unit 9.

The frequency correction unit 16 finds the frequency deviation between the transmitting side and the receiving side and the direction of the deviation from the correlation between symbols of adjoining subcarriers based on the information input from the fast Fourier transforming unit (FFT) 8, the entire error rate detection unit 15, and the automatic gain control circuit 14 and outputs a control voltage to the voltage-controlled oscillator 3 for correcting the frequency of the main carrier. The A/D converter 17 converts the control voltage from the frequency correction unit 16 from a digital to analog format and outputs the same to the voltage-controlled oscillator 3.

Next, an explanation will be given of the processing for establishing correlation of the inter-symbol interference between adjoining subcarriers in the frequency correction unit 16.

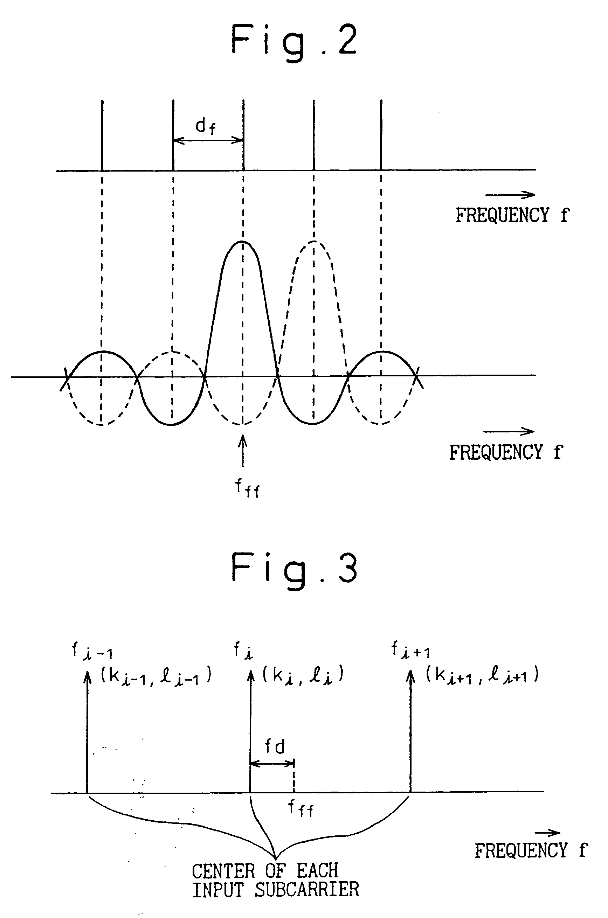

Figure 2 is a view for explaining the subcarrier. As shown in the figure, in the orthogonal frequency division multiplex (OFDM) mode, the interval of frequencies of subcarriers is defined as df, a length of the effective symbol is defined as ts (refer to Fig. 21), and a timing frequency of the fast Fourier transforming unit (FFT) 8 is defined as $f_{ff}$. Each subcarrier is modulated, and the spectrum is spread. Accordingly, there is a possibility of interference between codes of subcarriers. There is however no interference when the orthogonal conditions, that is, ts = 1/df and $f_{ff}$ coincides with the input frequency (coincides within 2% of df) are satisfied. Here, a case where $f_{ff}$ in the fast fourier transforming unit (FFT) 8 on the receiver side deviates by fd (Fig. 3) relative to each subcarrier will be considered.

When deviation occurs in the frequency of this $f_{ff}$, error (nonalignment) occurs in the value of subcarriers due to the inter-symbol interference, mutual influence occurs in adjoining subcarriers as the inter-symbol interference and the subcarriers become no longer independent. Therefore, by distinguishing between interference on the high frequency side and interference on the low frequency side, it is decided whether the deviation of $f_{ff}$ is on the plus side or minus side.

Figure 3 is a view for explaining the relationship of the subcarrier, the phase value, and the frequency deviation. As shown in the figure, when the frequencies of representative subcarriers are fi-1, fi, and fi+1 and the phase values of them are (ki-1, li-1), (ki, li), and (ki+1, li+1), the modulated subcarriers are:

$$Ei-1=(ki-1)\,sin2\pi\,fi-1+(li-1)\,cos2\pi\,fi-1\ldots(1)$$

$$Ei=(ki)\,sin2\pi\,fi+(li)\,cos2\pi\,fi\ldots(2)$$

$$Ei+1=(ki+1)\,sin2\pi\,fi+1+(li+1)\,cos2\pi\,fi+1\ldots(3)$$

Note that, in the case of QPSK, they are, for example, (ki, li) = (1, 1), (1, -1), (-1, 1), and (-1, -1).

In the fast Fourier transforming unit (FFT) 8 of the receiving side, the subcarrier corresponding to the frequency fi is detected by the FFT computation as follows:

$$Vos(i)=\int_{0}^{ts}E\cdot sin2\pi\,(fi+fd)\,t\cdot dt\ldots(4)$$

$$Voc(i)=\int_{0}^{ts}E\cdot cos2\pi\,(fi+fd)\,t\cdot dt\ldots(5)$$

Where, Vos denotes the sine side output of the result of the above FFT computation, and Voc denotes the cosine side of the same.

Here, the input signal E(t) is represented as:

$$E=\ldots Ei-1+Ei+Ei+1\ldots\ldots(6)$$

Here, when approximated, it becomes:

$$Vos(i)\fallingdotseq 1/2\,[ki+ki+1\cdot\int_{0}^{ts}E\cdot cos2\pi\,(df-fd)\,t\cdot dt$$

$$+ki-1\cdot\int_{0}^{ts}E\cdot cos2\pi\,(df+fd)\,t\cdot dt]$$

$$=1/2\,[ki-Vx\cdot(ki+1-ki-1)]\ldots(7)$$

where

$$Vx=(sin2\pi fd \cdot ts)/(df-fd)\ldots(8)$$

$$Voc(i)\doteq 1/2\left[li+li+1\cdot\int_0^{ts}E\cdot cos2\pi(df-fd)t\cdot dt\right.$$

$$\left.+li-1\cdot\int_0^{ts}E\cdot cos2\pi(df+fd)t\cdot dt\right.$$

$$=1/2\left[i-Vy\cdot(li+1-li-1)\right]\ldots(9)$$

where,

$$Vy=(sin2\pi fd\cdot ts)/(df+fd)\ldots(10)$$

Further, the level V(i) of the subcarrier of the frequency fi is obtained as:

$$V(i)=(Vos(i)^2+Voc(i)^2)^{1/2}\ldots(11)$$

Note that, in the case of QPSK, if frequency deviation fd = 0, v(i) = $2^{1/2}$.

Next, if fd = 0, ts = 1/df, therefore it becomes:

$$\int_0^{ts}E\cdot cos2\pi(df-fd)t\cdot dt$$

$$=\int_0^{ts}E\cdot cos2\pi(df+fd)t\cdot dt$$

$$=0$$

so an inherent phase value (ki, li) can be taken out. However, if fd is not equal to 0, the influence of the sign of (ki, li) appears. That is, inter-symbol interference occurs.

Note, according to whether fd > 0 or fd < 0, the influences of the inter-symbol interference with respect to Vos of Equation (7) and Voc of Equation (9) are different.

In the case of fd > 0 in Equation (7), Vx > 0, therefore when the signs of ki and ki+1 are different and the signs of ki and ki-1 are the same, for example, in QPSK, the equation is

$$Vos(i)\doteq 1+2Vx$$

or

$$Vos(i)\doteq -1-2Vx\ldots(12)$$

In this case, by Equation (11), the level of the subcarrier of the frequency fi will be increased.

Further, where the signs of ki and ki+1 are the same and the signs of ki and ki-1 are different, it becomes:

$$Vos(i) = 1 - 2Vx$$

$$or$$

$$Vos(i) = -1 + 2Vx \ldots (13)$$

In this case, by Equation (11), the level of the subcarrier of the frequency fi will be decreased.

Similarly, in the case of fd < 0, Vx < 0, therefore reverse relationships to those described above stand.

Further, in the case of fd > 0 in Equation (9), Vy > 0, therefore where the signs of li and li+1 are different and the signs of li and li-1 are the same, the equation becomes:

$$Voc = 1 + 2Vy \ldots (14)$$

or

$$Voc(i) = -1 - 2Vy \ldots (15)$$

In this case, by Equation (11), the level of the subcarrier of the frequency fi will be increased.

Further, where the signs of li and li+1 are the same and the signs of li and li-1 are different, the equation becomes:

$$Voc(i) = 1 - 2Vy \ldots (16)$$

or

$$Voc(i) = -1 + 2Vy \ldots (17)$$

In this case, by Equation (11), the level of the subcarrier of the frequency fi will be decreased.

Similarly, in the case of fd < 0, Vy < 0, therefore the reverse relationships to those described above stand.

When summarizing the above, the level difference of subcarriers becomes larger or smaller by the difference between the modulation phase at the frequency fi and the modulation phase at the adjoining frequency to fi. (phase difference), but when fd > 0, as the phase difference, when the signs of ki and ki+1 are different and the signs of ki and ki-1 are the same and further the signs of li and li+1 are different and the signs of li and li-1 are the same, V(i) becomes the maximum, i.e., becomes:

$$V(i)\max = [(1 + 2Vx)^2 + (1 + 2Vy)^2]^{1/2} \ldots (18)$$

while when the signs of ki and ki+1 are the same and the signs of ki and ki-1 are different and further the signs of li and li+1 are the same and the signs of li and li-1 are different, V(i) becomes the minimum, i.e., becomes:

$$V(i)\min = [(1 - 2Vx)^2 + (1 - 2Vy)^2]^{1/2} \ldots (19)$$

In the case of fd < 0, the phase difference becomes reverse to that described above, and Equations (18) and (19) are replaced by each other.

Accordingly, it becomes possible to decide whether the frequency deviation fdx is on the plus side or minus side from the phase difference between adjoining subcarriers and the level difference between adjoining subcarriers. The magnitude of the subcarrier level corresponds to the frequency deviation fd at that time based on Equations (18) and (19).

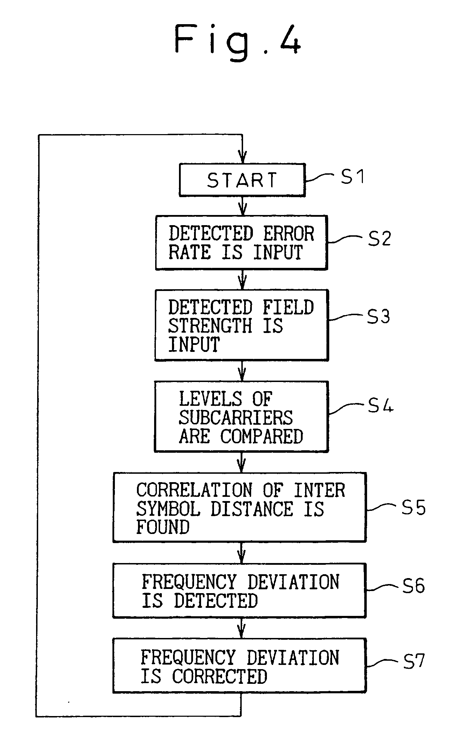

Figure 4 is a flow chart for explaining an example of a control operation of the frequency correction unit 16 of Fig. 1. When the operation is started at step 1, at step S2 a result of the error rate detection is input from the entire error rate detection unit 15 to the correction unit 16 and at step S3 the result of the power strength detection is input from the automatic gain control circuit 14 to the correction unit 16. At step S4, the information of the subcarrier is input from the fast fourier transforming unit 8 and the amplitudes (levels) of adjoining subcarriers are compared. At step S5, the correlation of the inter-symbol distance of the adjoining subcarriers is found. At step S6, the frequency deviation is detected from the results of processing of step S4 and step S5. At step S7, the frequency deviation is corrected for the voltage-controlled oscillator 3. Below, an explanation will be made of details of the steps.

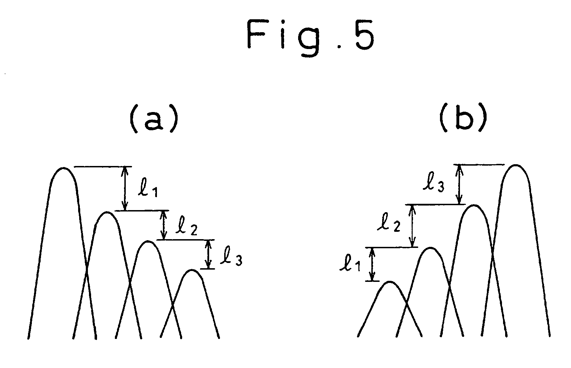

Figure 5 is a view for explaining the comparison of the subcarrier levels of step S4. As explained above, in the above (A), i.e., when a frequency synchronization error occurs in the receiver, the above (B), i.e., when a time synchronization error occurs in the receiver, and in the above (C), i.e., a distortion occurs in the receiver, subcarriers are no longer independent and inter-symbol interference is produced, therefore, as shown in (a) and (b) of the figure, a level difference is produced in subcarriers between adjoining subcarriers. Accordingly, if the level difference of the adjoining subcarriers is small, the frequency synchronization error in the receiver, the time synchronization error in the receiver, and the distortion in the receiver do not occur, and it can be quickly decided that the state of reception is good. Conversely, if the level difference between the adjoining subcarriers is large, the frequency synchronization error in the receiver, the time synchronization error in the receiver and the distortion in the receiver are produced and it can be quickly decided that the state of reception is bad. Namely, the level difference of adjoining subcarriers can be detected as frequency deviation while being distinguished from multipath disturbance etc.

In order to make the level difference of adjoining subcarriers smaller, the feedback control voltage to the voltage-controlled oscillator 3 is finely changed to the plus side or minus side, the control voltage of the next step is corrected in the direction making the level difference smaller, and this control is repeated.

Note that, it is possible to make the amount of frequency correction to be changed to the plus side or minus side larger when the level difference is large and smaller when the level difference is small.

Next, as explained above, a level difference occurs between adjoining subcarriers even in the case of the above (D), i.e., the multipath disturbance occurs, and the above (E), i.e., the input is weak. In the case of the above (A) etc., a level difference of the subcarriers occurs more than the case of the above (D) etc. For this reason, when the levels of the subcarriers are larger than a predetermined value, it can be regarded not that a level difference of subcarriers occurs by the case of (D) etc. due to the occurrence of a multipath disturbance etc., but a level difference of subcarriers occurs by the case of (A) etc. due to the occurrence of frequency synchronization error at the receiver.

As shown in Fig. 5, when the levels of the subcarriers are compared, defining the differences of the adjoining subcarrier levels as l1, l2, ..., ln, the sum lt is found as follows:

$$lt=l1+l2+...+ln...(20)$$

Using the sum of the differences of the subcarrier levels, the precision of the decision is improved.

Next, a detailed explanation will be given of the correlation of the inter-symbol distance of step S5 of Fig. 4.

As another example, the frequency deviation will be explained in relation to the phase difference represented in terms of the inter-symbol distance and the correlation of level differences of the subcarriers.

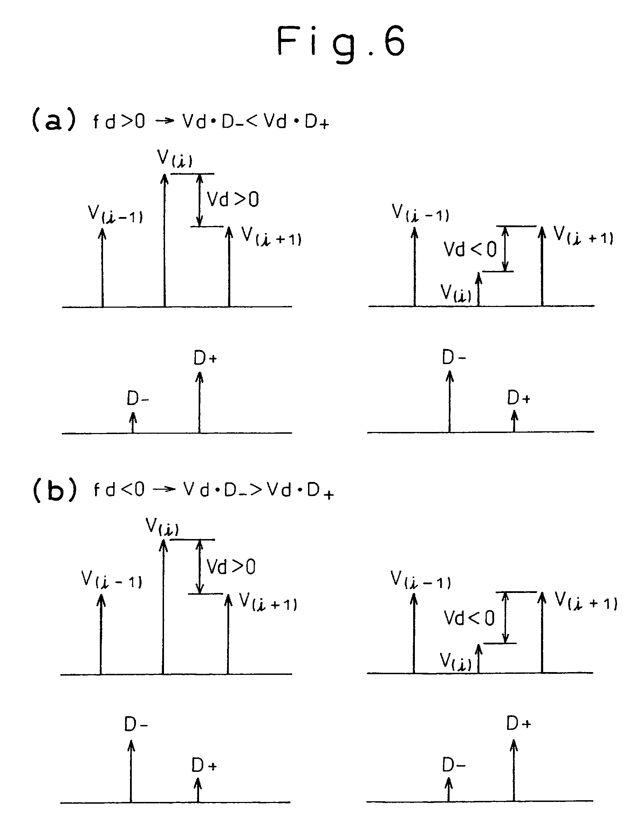

The level difference Vd(i,i+1) (Fig. 6) of the subcarriers of the frequencies fi and fi+1 is:

$$Vd(i,i+1)=V(i)-V(i+1)$$
$$=(Vos(i)^2+Voc(i)^2)^{1/2}$$
$$-(Vos(i+1)^2+Voc(i+1)^2)^{1/2} \quad ...(21)$$

Here, i is the subcarrier number.

Next, using a subcarrier of a frequency fi as a reference, the inter-symbol distance $D_+$ of the subcarriers of the frequencies fi and fi+1 becomes:

$$D_+ = D(i+1,i)$$
$$= |Vos(i+1)-Vos(i)|$$
$$+|Voc(i+1)-Voc(i)| \quad \ldots (22)$$

and the inter-symbol distance $D_-$ of subcarriers of frequencies fi and fi-1 becomes:

$$D_- = D(i-1,i)$$
$$= |Vos(i-1)-Vos(i)|$$
$$+|Voc(i-1)-Voc(i)| \quad \ldots (23)$$

Note that, in Equations (22) and (23), the distance found as an absolute value can be found by a root means square, too.

Figure 6 is a view for explaining the correlation of the inter-symbol distance in detail. In the case of fd > 0 of (a) of the figure, as shown on the left side, 0 < Vd (i,i+1) and $D_- < D_+$. Here, $D_- < D_+$ represents the modulation phase difference when the signs of ki and ki+1 are different and the signs of ki and ki-1 are the same as explained in the example of Equation (12).

On the right side of (a) of the figure, 0 > Vd (i,i+1) and $D_- > D_+$. In this case, the signs of ki and ki+1 are the same and the signs of ki and ki-1 are different.

Namely, in the case of fd > 0, the following stands:

$$Vd \cdot D_- < Vd \cdot D_+ \quad \ldots (24)$$

That is, when this condition stands, the frequency deviation fd is on the plus side.

Also, for the case of fd < 0 of (b) of the figure, similarly the following stands:

$$Vd \cdot D_- > Vd \cdot D_+ \quad \ldots (25)$$

That is, when this condition stands, the frequency deviation fd is on the minus side.

Namely, the direction of deviation of the frequency fd can be decided by successively comparing the magnitude between Vd•$D_-$ and Vd•$D_+$. Further, it is also possible to detect the following as the magnitude of the frequency deviation:

$$Vd \cdot D_+ - Vd \cdot D_- \quad \ldots (26)$$

An explanation was made above of the frequencies fi-1, fi, and fi+1, but when they are expanded to the frequencies $fi_0-1$, $fi_0$, $fi_0+1$, ... and are generalized up to subcarriers of the frequency $fi_0$, the direction of the frequency deviation fd is decided by successively comparing the magnitude of:

$$\sum_{i<i_0} Vdi_0 \cdot D_- i_0 \quad and \quad \sum_{i>i_0} Vdi_0 \cdot D_+ i_0$$

Here, in Equations (21), (22), and (23), they are respectively replaced by $Vdi_0 = Vd(i_0, i+1)$, $D_+i_0 = D_-(i+1, i_0)$, and $D_-i_0 = D(i-1, i_0)$.

Further, it is also possible to detect the following as the magnitude of the frequency deviation:

$$\sum_{i>1_0} Vdi_0 \cdot D_+ i_0 \;-\; \sum_{i<1_0} Vdi_0 \cdot D_- i_0 \ldots (27)$$

An explanation was made above of the case (A) where the frequency synchronization error occurs at the receiver. In this case, the frequency is corrected based on the detected frequency deviation, specifically the control voltage is output to the voltage-controlled oscillator 3 corresponding to the frequency deviation and the feedback control is carried out.

Next, the deviation from the center of the subcarrier is corrected by the feedback control based on the detection of the frequency deviation, but where this correction is not sufficient, there is a case where the entire error rate from the entire error rate detection unit 15 becomes large and exceeds a predetermined value. In this case, it is also possible to perform the feedback control of the frequency deviation until the entire error rate becomes small. In this case, it is also possible to find the entire error rate a plurality of times and use an average value thereof. This is for performing a more correct measurement. Note that when the entire error rate is small, it is also possible to make the time interval of adjustment large. This is for preventing unnecessary adjustment and making stable reception possible.

Note that, for the above case of occurrence of (B), that is, time synchronization error at the receiver, assume that a frequency deviation occurs exceeding the frequency interval df of the subcarriers. In such a case, for example, where the entire error rate of the entire error rate detection unit 15 is large even after the frequency is corrected so that the sum of the level differences of Equation (20) becomes not more than a certain value, it is also possible to correct the frequency deviation fd by exceeding the frequency interval df of the subcarriers. In this case, if the entire error rate is more than a predetermined value, a frequency shift is sequentially carried out by exactly the frequency interval df of the subcarriers. This is repeated until it becomes a predetermined value or less. For example, a frequency shift is sequentially carried out as +df, -df, +2df, -2df, +3df, -3df, .... It is also possible to perform the correction again so that the sum of the level differences of Equation (20) becomes the minimum after the entire error rate becomes a predetermined value or less.

Note that it is also possible to find a plurality of entire error rates for taking the average value thereof, and determine the direction of the frequency shift thereby. This is because more correct measurement becomes possible. Further, when the entire error rate is small, it is also possible to make the time interval of adjustment large. This is because stable reception becomes possible by preventing unnecessary adjustment.

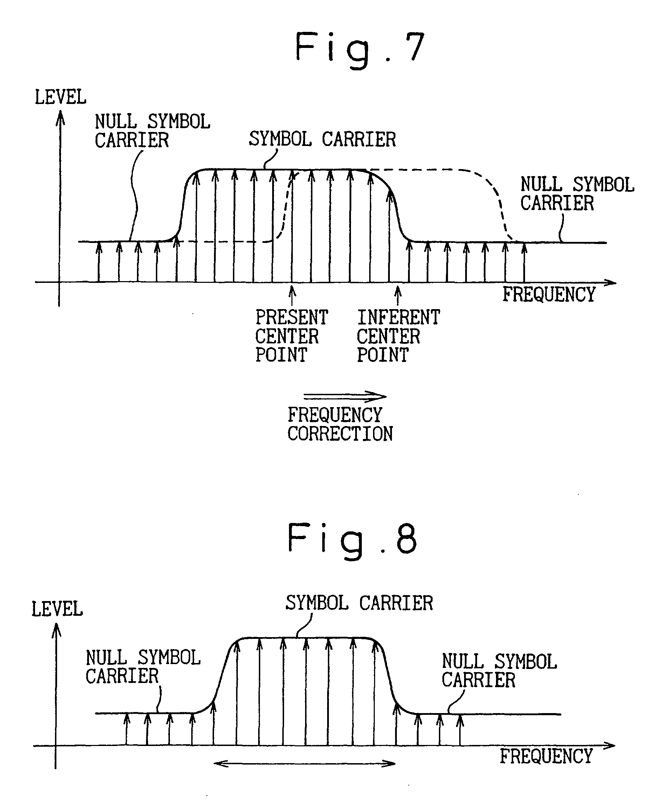

Figure 7 is a view of an example of correction of the frequency deviation based on the center position of distribution of the frequency spectrum of the subcarrier. It is also possible to find the frequency deviation from the deviation of the present center position of the frequency spectrum distribution and the inherent center position based on the frequency spectrum distribution of the subcarrier of the symbol obtained from the fast Fourier transforming unit (FFT) 8 and correct the same as shown in the figure in place of the aforesaid entire error rate detection unit 15.

Figure 8 is a view for explaining an example for determining the center position of the spectrum distribution of Fig. 7. As shown in the figure, the symbol carrier is sandwiched between null symbol carriers, therefore, it is also possible to determine the center position of the frequency spectrum based on the part of the symbols by measuring the level of all subcarriers.

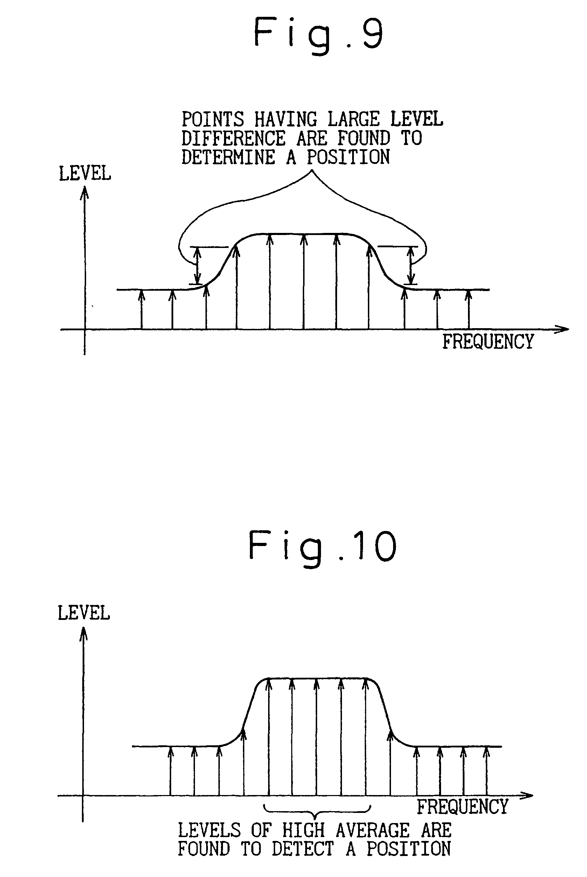

Figure 9 is a view of a concrete example for determining the center position of the frequency spectrum distribution of Fig. 8. As shown in the figure, it is also possible to measure the entire frequency spectrum and determine the center position of the frequency spectrum based on subcarrier frequencies of both of a low frequency side and high frequency side, where the level difference of adjoining subcarriers is large.

Figure 10 is a view of another concrete example for determining the center position of the spectrum distribution of Fig. 8. As shown in the figure, it is also possible to measure the entire frequency spectrum, continuously view the average value of a plurality of levels, regard the position with a high average value as the frequency spectrum distribution of the effective symbol, and determine the center position thereof.

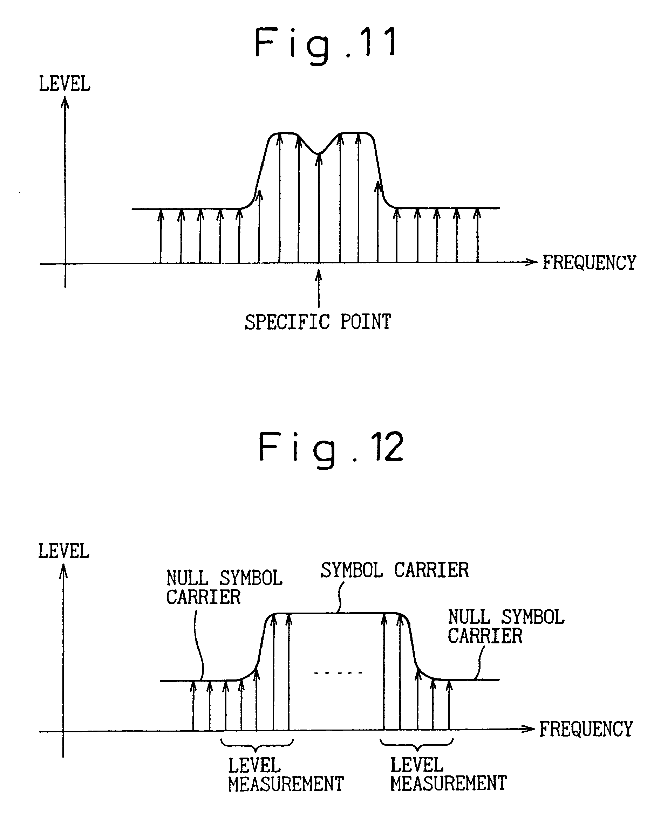

Figure 11 is a view for explaining an example of a case where there is a specific point in the spectrum distribution. As shown in the figure, when there is a specific point such as a recess in part of the frequency spectrum distribution of the symbol by measuring the entire frequency spectrum, the center position of the frequency spectrum distribution is not determined. In this case, the frequency deviation is not corrected. This is because the precise frequency deviation cannot be found due to the specific point.

Figure 12 is a view of another concrete example for determining the center position of the frequency spectrum distribution of Fig. 8. As shown in the figure, it is also possible not to measure the entire frequency spectrum, but to measure only the frequency spectrum near both the null symbol carrier and the symbol carrier and determine the center position of the frequency spectrum based on the subcarrier frequencies of both the low frequency side and high frequency side with which the level difference between adjoining subcarriers is large.

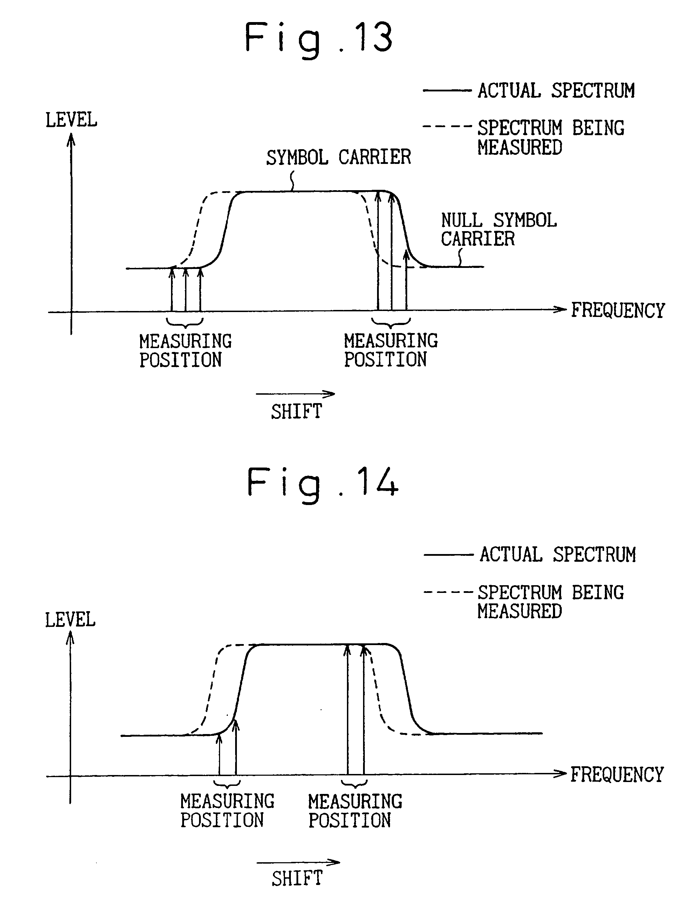

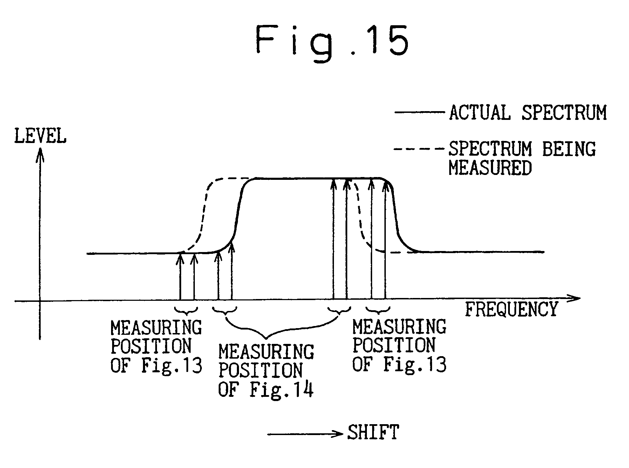

Figure 13 is a view of a modification of the concrete example of Fig. 12. As shown in the figure, in the frequency spectrum at each measurement position, the sums of levels of a plurality of subcarriers are taken at null symbol carrier areas near both the low frequency side and high frequency side of the symbol carrier, and these sum values are compared. When the frequency spectrum now being measured deviates relative to an actual frequency spectrum, for example, when the sum value at the measurement position on the high frequency side is large, it is also possible to perform a frequency shift to the high frequency side by regarding that the center position of the frequency spectrum now being measured has been shifted to the low frequency side.

Figure 14 is a view of a modification of the concrete example of Fig. 13. As shown in the figure, in the frequency spectrum being measured, the sums of levels of a plurality of subcarriers are taken at the symbol carrier areas near both the low frequency side and high frequency side of the symbol carrier, and these sum values are compared. Then, when the frequency spectrum now being measured deviates relative to an actual frequency spectrum, for example, when the sum value on the low frequency side is small, it is also possible to perform the frequency shift to the high frequency side by regarding that the present center position of the frequency spectrum has been shifted to the low frequency side.

Figure 15 is a view of a combination of the concrete examples of Fig. 13 and Fig. 14. By the combination shown in the figure, the direction of the frequency shift can be correctly found.

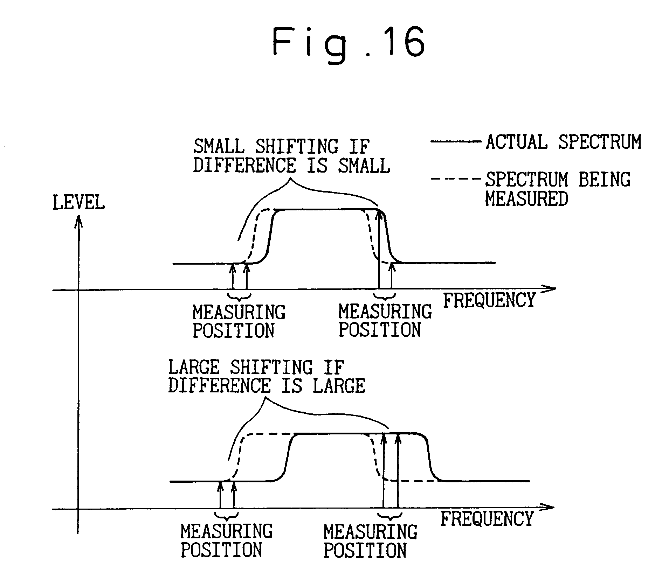

Figure 16 is a view for explaining the correction amount of the frequency deviation by taking as an example the case of Fig. 13. As shown in the figure, it is also possible to make the frequency shift small when the difference of the sum value on the low frequency side and the sum value on the high frequency side is small and make the frequency shift large when the difference of the sum values is large.

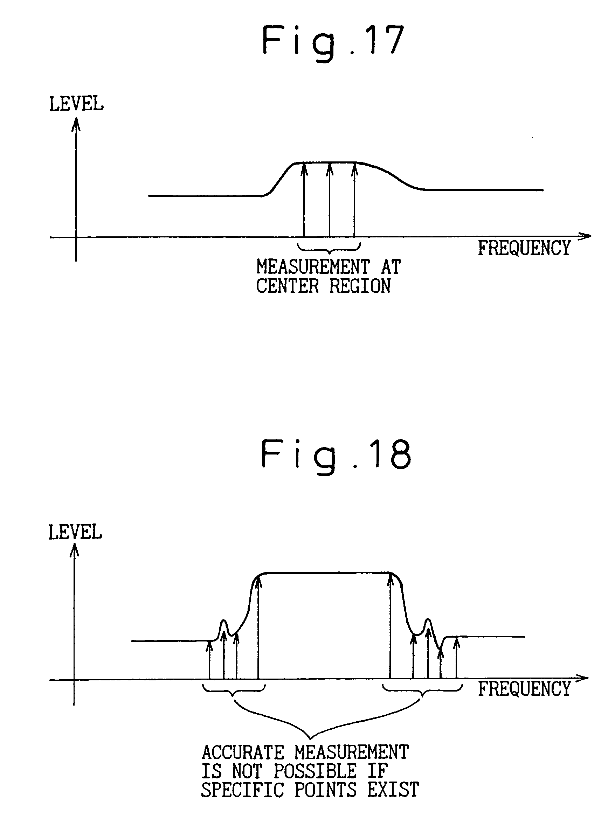

Figure 17 is a view for explaining the measurement of the subcarrier level at the present center area of the frequency spectrum. As shown in the figure, the frequency shift is not carried out when the subcarrier level at the present center area of the frequency spectrum is small. This is because if it is small, the precision of the direction of the frequency shift is not good.

Figure 18 is a view for explaining the case where there is a specific point near the null symbol carrier and the symbol carrier. As shown in the figure, when there is a specific point near both the null symbol carrier and the symbol carrier, the frequency shift is not carried out. This is because if there is a specific point, the precision of the direction of the frequency shift is not good.

By the above explanation, according to the present invention, amplitude variations can be detected by the frequency synchronization error and the frequency can be quickly corrected.

While the invention has been described by reference to specific embodiments chosen for purposes of illustration, it should be apparent that numerous modifications could be made thereto by those skilled in the art without departing from the scope of the invention, as defined in the appended claims.

## Claims

1. An orthogonal frequency division multiplexing receiver for receiving a signal obtained by phase-modulating a plurality of orthogonal subcarriers, provided with:

   a voltage-controlled oscillator(3) for generating a local carrier for reproducing a baseband signal from a received signal;
   a frequency analyzing unit (8) for finding amplitudes and phase values of subcarriers by analyzing the frequency of said baseband signal; and
   a frequency correction unit (16) for detecting the amplitude difference occurring between subcarriers by an inter-symbol interference due to the frequency deviation of the local carrier relative to the transmitting side frequency and correcting the frequency deviation of said local carrier to give the minimum amplitude difference, wherein said frequency correction unit (16) is adapted to compare (S4) the amplitudes of adjoining subcarriers by using the sum of the amplitude differences for each two adjoining subcarriers to find (S5) a measure of the phase difference between adjoining subcarriers, to detect (S6) said frequency deviation of said local carrier based on both said detected amplitude difference and said measure of the phase difference, and to control (S7) the frequency of said local carrier so as to give the minimum amplitude difference depending on the magnitude of said detected frequency deviation.

2. An orthogonal frequency division multiplexing receiver as set forth in claim 1, further provided with a reception state judgement circuit (16) for judging the state of reception in accordance with the amplitude difference between subcarriers.

3. An orthogonal frequency division multiplexing receiver as set forth in claim 1, wherein said frequency correction unit (16) detects the amplitude difference between adjoining subcarriers to suppress erroneous detection due to amplitude differences caused by multipath disturbance and decides that a frequency deviation has occurred in the local carrier.

4. An orthogonal frequency division multiplexing receiver as set forth in claim 1, wherein said frequency correction unit (16) corrects the frequency deviation of the local carrier so as to give the smallest sum of a plurality of amplitude differences between adjoining subcarriers.

5. An orthogonal frequency division multiplexing receiver as set forth in claim 4, wherein said frequency correction unit (16) increments or decrements the frequency deviation of the local carrier, changes the correction value of the next step in a direction where the sum of the amplitude differences becomes smaller, and then repeats this routine.

6. An orthogonal frequency division multiplexing receiver as set forth in claim 5, wherein said frequency correction unit (16) makes the correction amount of the frequency deviation large when the sum of the amplitude differences is large and small when the sum is small.

7. An orthogonal frequency division multiplexing receiver as set forth in claim 1, wherein said frequency correction unit (16) stops the correction of the frequency deviation and maintains the state before the frequency correction when the field intensity falls.

8. An orthogonal frequency division multiplexing receiver as set forth in claim 4, wherein an entire error rate is found from the sign obtained at the frequency analyzing unit (8) and wherein said frequency correction unit (16) shifts the frequency over the frequency interval df of the subcarriers when the frame error rate exceeds a predetermined value.

9. An orthogonal frequency division multiplexing receiver as set forth in claim 8, wherein said frequency correction unit (16) corrects the frequency deviation so that the sum of the amplitude differences becomes less than a predetermined value, then detects the frame error rate, if the frame error rate is more than a predetermined value, successively performs the frequency shift by +df, -df, +2df, -2df, +3df, -3df, ... based on the frequency interval df of the subcarriers, and, after the frame error rate has become less than a predetermined value, corrects the frequency deviation again so that the sum of the amplitude differences becomes the minimum.

10. An orthogonal frequency division multiplexing receiver as set forth in claim 9, wherein said frequency correction unit (16) controls the correction using the successive frequency shifts and the deviation of the frequency as feedback amounts.

11. An orthogonal frequency division multiplexing receiver as set forth in claim 8 or 9, wherein the frequency correction unit (16) is adapted to shift the frequency over the frequency interval of the subcarriers in a direction based on the average value of the frame error rate.

12. An orthogonal frequency division multiplexing receiver as set forth in claim 8 or 9. which increases the time interval between adjustments of the frequency shift when the frame error rate is smaller than a predetermined threshold.

13. An orthogonal frequency division multiplexing receiver as set forth in claim 8 or 9, wherein the frequency correction unit (16) is adapted to stop the correction of the frequency shift and maintains the state before the frequency correction if the frame error rate falls by an extreme amount.

14. An orthogonal frequency division multiplexing receiver as set forth in claim 1, wherein said frequency correction unit (16) judges that the frequency deviation is small when the phase difference between adjoining subcarriers is smaller than a predetermined threshold and the amplitude of the specific subcarrier is smaller than the amplitude of the adjoining subcarrier, while judges that the frequency deviation is large when the phase difference between adjoining subcarriers is larger than a predetermined threshold and the amplitude of the specific subcarrier is larger than the amplitude of the adjoining subcarrier.

15. An orthogonal frequency division multiplexing receiver as set forth in claim 14, wherein the phase difference between adjoining subcarriers is found by a comparison of the product, $Vd \cdot D_+$ and $Vd \cdot D_-$, between the amplitude difference $Vd$ between the specific subcarrier and one adjoining subcarrier and distances $D_+$ and $D_-$ between the specific subcarrier and the two adjoining subcarriers.

16. An orthogonal frequency division multiplexing receiver as set forth in claim 14, wherein the phase difference between adjoining subcarriers is found as the difference of the product sums of the distances $D_+i_0$ and $D_-i_0$ for the specific subcarrier $i_0$ and a plurality of subcarriers with respect to the amplitude difference $Vdi_0$ between the specific subcarrier $i_0$ and adjoining subcarriers, that is,

$$\sum_{i > i_0} Vdi_0 \cdot D_+ i_0 \quad - \quad \sum_{i < i_0} Vdi_0 \cdot D_- i_0$$

(i: number of subcarrier)

and judges the frequency deviation to be positive if the difference is positive and the frequency deviation to be negative if the difference is negative.

17. An orthogonal frequency division multiplexing receiver as set forth in claim 16, wherein the frequency correction unit(16) controls the correction using the positive frequency deviation and the negative frequency deviation as feedback amounts.

18. An orthogonal frequency division multiplexing receiver as set forth in claim 8 or 9, wherein the frequency correction unit (16) uses as a reference a center position of a frequency spectrum of a plurality of subcarriers as a direction of frequency deviation.

19. An orthogonal frequency division multiplexing receiver as set forth in claim 18, wherein the frequency correction unit (16) measures all of the amplitudes of the null symbol subcarriers and all of the amplitudes of the symbol subcarriers so as to judge a center position of the frequency spectrum.

20. An orthogonal frequency division multiplexing receiver as set forth in claim 19, wherein the frequency correction unit (16) judges a center position of the frequency spectrum based on a level difference with an adjoining subcarrier larger than a predetermined threshold.

21. An orthogonal frequency division multiplexing receiver as set forth in claim 19, wherein the frequency correction unit (16) judges a center position of the frequency spectrum based on an average amplitude of a plurality of consecutive subcarriers.

22. An orthogonal frequency division multiplexing receiver as set forth in claim 19, wherein the frequency correction unit (16) stops finding the center position of the frequency spectrum when there is a change in amplitude within the null symbol subcarrier or symbol subcarrier frequencies in the frequency spectrum.

23. An orthogonal frequency division multiplexing receiver as set forth in claim 8 or 9, wherein the frequency correction unit (16) measures the amplitude differences of a plurality of null symbol subcarriers and a plurality of symbol subcarriers on the respective sides of the boundary between a null symbol carrier and symbol carrier so as to judge a central position of the frequency spectrum.

24. An orthogonal frequency division multiplexing receiver as set forth in claim 23, wherein said frequency correction unit (16) compares the sum of the amplitudes of a plurality of null symbol subcarriers at frequencies below the symbol carrier frequency range with the sum of the amplitudes of a plurality of null symbol subcarriers- at frequencies above the symbol carrier frequency range and shifts the frequency to the larger sum side.

25. An orthogonal frequency division multiplexing receiver as set forth in claim 23, wherein said frequency correction unit (16) compares the sum of the amplitudes of a plurality of symbol subcarriers at frequencies below the mid-point of the symbol carrier frequency range with the sum of the amplitudes of a plurality of symbol subcarriers at frequencies above the mid-point symbol carrier frequency range and shifts the frequency to the larger sum side.

26. An orthogonal frequency division multiplexing receiver as set forth in claim 23, wherein said frequency correction unit (16) compares the sum of the amplitudes of a plurality of null symbol subcarriers at frequencies below the symbol carrier frequency range with the sum of the amplitudes of a plurality of null symbol subcarriers at frequencies above the symbol carrier frequency range and shifts the frequency to the larger sum side and further compares the sum of the amplitudes of a plurality of symbol subcarriers at frequencies below the mid-point of the symbol carrier frequency range with the sum of the amplitudes of a plurality of symbol subcarriers at frequencies above the mid-point symbol carrier frequency range and shifts the frequency to the larger sum side.

27. An orthogonal frequency division multiplexing receiver as set forth in claim 24 or 25, wherein said frequency correction unit (16) further shifts the frequency by an amount proportional to the result of the comparison of the sums.

28. An orthogonal frequency division multiplexing receiver as set forth in claim 8 or 9, wherein said frequency correction unit (16) measures the amplitudes of a plurality of symbol subcarriers centered around the mid-point of the symbol carrier frequency range and stops the frequency shift when the sum of the amplitudes is less than a predetermined extent.

29. An orthogonal frequency division multiplexing receiver as set forth in claim 8 or 9, wherein said frequency correction unit (16) measures the amplitudes of a plurality of null symbol subcarriers below and/or above the frequency range of a symbol carrier and stops the frequency shift when there is a change in amplitude within the one or more frequency ranges of the null symbol subcarriers.


**Patentansprüche**

1. Orthogonal-Frequenzmultiplex-Empfänger zum Empfangen eines Signals, welches durch eine Phasenmodulation von einer Mehrzahl von Orthogonal-Unterträgern erlangt wird, welcher bereitgestellt ist mit:

    einem spannungsgesteuerten Oszillator (3) zum Erzeugen eines Lokalträgers zum Reproduzieren eines Basisbandsignals von einem empfangenen Signal;
    einer Frequenzanalyse-Einheit (8) zum Auffinden von Amplituden- und Phasenwerten von Unterträgern durch ein Analysieren der Frequenz des Basisbandsignals; und
    einer Frequenzkorrektur-Einheit (16) zum Erfassen von der Amplitudendifferenz, welche zwischen Unterträgern durch eine Zwischensymbol-Interferenz aufgrund der Frequenzabweichung von dem Lokalträger in Relation zur Übertragungsseite-Frequenz auftritt, und Korrigieren von der Frequenzabweichung des Lokalträgers, um die minimale Amplitudendifferenz anzugeben, wobei die Frequenzkorrektur-Einheit (16) dazu angepasst ist, um die Amplituden von angrenzenden Unterträgern zu vergleichen (S4), indem die Summe von den Amplitudendifferenzen für alle zwei angrenzende Unterträger verwendet wird, um eine Größe von der Phasendifferenz zwischen angrenzenden Unterträgern zu finden (S5), um die Frequenzabweichung von dem Lokalträger basierend auf sowohl der erfassten Amplitudendifferenz als auch der Größe von der Phasendifferenz zu erfassen (S6), und um die Frequenz von dem Lokalträger zu steuern (S7), um die minimale Amplitudendifferenz in Abhängigkeit von dem Betrag von der erfassten Frequenzabweichung anzugeben.

2. Orthogonal-Frequenzmultiplex-Empfänger nach Anspruch 1, welcher ferner mit einer Empfangszustand-Beurteilungsschaltung (16) bereitgestellt ist, um den Zustand des Empfangs gemäß der Amplitudendifferenz zwischen Unterträgern zu beurteilen.

3. Orthogonal-Frequenzmultiplex-Empfänger nach Anspruch 1, bei welchem die Frequenzkorrektur-Einheit (16) die Amplitudendifferenz zwischen angrenzenden Unterträgern erfasst, um eine fehlerhafte Erfassung aufgrund von Amplitudendifferenzen, welche durch eine Mehrwegestörung verursacht werden, zu unterdrücken, und entscheidet, dass eine Frequenzabweichung im Lokalträger auftrat.

4. Orthogonal-Frequenzmultiplex-Empfänger nach Anspruch 1, bei welchem die Frequenzkorrektur-Einheit (16) die Frequenzabweichung von dem Lokalträger korrigiert, um die kleinste Summe von einer Mehrzahl von Amplitudendifferenzen zwischen angrenzenden Unterträgern anzugeben.

5. Orthogonal-Frequenzmultiplex-Empfänger nach Anspruch 4, bei welchem die Frequenzkorrektur-Einheit (16) die Frequenzabweichung von dem Lokalträger erhöht oder verringert, den Korrekturwert von dem nächsten Schritt in eine Richtung, in welche die Summe von den Amplitudendifferenzen kleiner wird, ändert, und dann diese Routine wiederholt.

6. Orthogonal-Frequenzmultiplex-Empfänger nach Anspruch 5, bei welchem die Frequenzkorrektor-Einheit (16) die Korrekturgröße von der Frequenzabweichung hoch gestaltet, wenn die Summe von den Amplitudendifferenzen hoch ist, und klein gestaltet, wenn die Summe klein ist.

7. Orthogonal-Frequenzmultiplex-Empfänger nach Anspruch 1, bei welchem die Frequenzkorrektur-Einheit (16) die Korrektur von der Frequenzabweichung beendet und den Zustand vor der Frequenzkorrektur beibehält, wenn die Feldintensität fällt.

8. Orthogonal-Frequenzmultiplex-Empfänger nach Anspruch 4, bei welchem eine gesamte Fehlerrate anhand des Kennzeichens gefunden wird, welches an der Frequenzanalyse-Einheit (8) erlangt wird, und bei welchem die Frequenzkorrektur-Einheit (16) die Frequenz über das Frequenzintervall df von den Unterträgern verschiebt, wenn die Rahmen-Fehlerrate einen vorbestimmten Wert übersteigt.

9. Orthogonal-Frequenzmultiplex-Empfänger nach Anspruch 8, bei welchem die Frequenzkorrektur-Einheit (16) die Frequenzabweichung korrigiert, so dass die Summe von den Amplitudendifferenzen kleiner als ein vorbestimmter Wert wird, dann die Rahmen-Fehlerrate erfasst, wenn die Rahmen-Fehlerrate höher als ein vorbestimmter Wert ist, sukzessiv die Frequenzverschiebung durch +df, -df, +2df, -2df, +3df, -3df, ... basierend auf dem Frequenzintervall df von den Unterträgern durchführt, und, nachdem die Rahmen-Fehlerrate kleiner als ein vorbestimmter Wert wurde, die Frequenzabweichung abermals korrigiert, so dass die Summe von den Amplitudendifferenzen das Minimum wird.

10. Orthogonal-Frequenzmultiplex-Empfänger nach Anspruch 9, bei welchem die Frequenzkorrektur-Einheit (16) die Korrektur unter Verwendung der sukzessiven Frequenzverschiebungen und der Abweichung von der Frequenz als Rückführgrößen steuert.

11. Orthogonal-Frequenzmultiplex-Empfänger nach Anspruch 8 oder 9, bei welchem die Frequenzkorrektur-Einheit (16) dazu angepasst ist, die Frequenz über das Frequenzintervall von den Unterträgern in eine Richtung basierend auf dem mittleren Wert von der Rahmen-Fehlerrate zu verschieben.

12. Orthogonal-Frequenzmultiplex-Empfänger nach Anspruch 8 oder 9, welcher das Zeitintervall zwischen Einstellungen von der Frequenzverschiebung erhöht, wenn die Rahmen-Fehlerrate kleiner als ein vorbestimmter Schwellwert ist.

13. Orthogonal-Frequenzmultiplex-Empfänger nach Anspruch 8 oder 9, bei welchem die Frequenzkorrektur-Einheit (16) dazu angepasst ist, die Korrektur von der Frequenzverschiebung zu beenden, und den Zustand vor der Frequenzkorrektur beibehält, wenn die Rahmen-Fehlerrate um eine extreme Größe fällt.

14. Orthogonal-Frequenzmultiplex-Empfänger nach Anspruch 1, bei welchem die Frequenzkorrektur-Einheit (16) beurteilt, dass die Frequenzabweichung klein ist, wenn die Phasendifferenz zwischen angrenzenden Unterträgern kleiner als ein vorbestimmter Schwellwert ist und die Amplitude von dem spezifischen Unterträger kleiner als die Amplitude von dem angrenzenden Unterträger ist, wohingegen sie beurteilt, dass die Frequenzabweichung hoch ist, wenn die Phasendifferenz zwischen angrenzenden Unterträgern höher als ein vorbestimmter Schwellwert ist und die Amplitude von dem spezifischen Unterträger höher als die Amplitude von dem angrenzenden Unterträger ist.

15. Orthogonal-Frequenzmultiplex-Empfänger nach Anspruch 14, bei welchem die Phasendifferenz zwischen angrenzenden Unterträgern durch einen Vergleich des Produktes $Vd * D_+$ und $Vd * D_-$ zwischen der Amplitudendifferenz $Vd$ zwischen dem spezifischen Unterträger und einem angrenzenden Unterträger mit Distanzen $D_+$ und $D_-$ zwischen dem spezifischen Unterträger und den zwei angrenzenden Unterträgern gefunden wird.

16. Orthogonal-Frequenzmultiplex-Empfänger nach Anspruch 14, bei welchem die Phasendifferenz zwischen angrenzenden Unterträgern als die Differenz von den Produktsummen von den Distanzen $D+i_0$ und $D_-i_0$ für den spezifischen Unterträger $i_0$ und einer Mehrzahl von Unterträgern mit Bezug auf die Amplitudendifferenz $Vdi_0$ zwischen dem spezifischen Unterträger $i_0$ und angrenzenden Unterträgern, d. h.

$$\sum_{i \rangle i_0} Vdi_0 * D_+i_0 - \sum_{i \langle i_0} Vdi_0 * D_-i_0$$

$$(i: \text{Nummer des Unterträgers})$$

gefunden wird, und die Frequenzabweichung als positiv beurteilt wird, wenn die Differenz positiv ist, und die Frequenzabweichung als negativ beurteilt wird, wenn die Differenz negativ ist.

**17.** Orthogonal-Frequenzmultiplex-Empfänger nach Anspruch 16, bei welchem die Frequenzkorrektur-Einheit (16) die Korrektur unter Verwendung der positiven Frequenzabweichung und der negativen Frequenzabweichung als Rückführgrößen steuert.

**18.** Orthogonal-Frequenzmultiplex-Empfänger nach Anspruch 8 oder 9, bei welchem die Frequenzkorrektur-Einheit (16) als eine Referenz eine Mittenposition von einem Frequenzspektrum von einer Mehrzahl von Unterträgern als eine Richtung von einer Frequenzabweichung verwendet.

**19.** Orthogonal-Frequenzmultiplex-Empfänger nach Anspruch 18, bei welchem die Frequenzkorrektur-Einheit (16) alle Amplituden der Null-Symbol-Unterträger und alle Amplituden der Symbol-Unterträger misst, um somit eine Mittenposition des Frequenzspektrums zu beurteilen.

**20.** Orthogonal-Frequenzmultiplex-Empfänger nach Anspruch 19, bei welchem die Frequenzkorrektur-Einheit (16) eine Mittenposition des Frequenzspektrums basierend auf einer Pegeldifferenz mit einem angrenzenden Unterträger beurteilt, welcher höher als ein vorbestimmter Schwellwert ist.

**21.** Orthogonal-Frequenzmultiplex-Empfänger nach Anspruch 19, bei welchem die Frequenzkorrektur-Einheit (16) eine Mittenposition des Frequenzspektrums basierend auf einer mittleren Amplitude von einer Mehrzahl von aufeinanderfolgenden Unterträgern beurteilt.

**22.** Orthogonal-Frequenzmultiplex-Empfänger nach Anspruch 19, bei welchem die Frequenzkorrektur-Einheit (16) ein Auffinden der Mittenposition des Frequenzspektrums beendet, wenn es eine Änderung in der Amplitude innerhalb des Null-Symbol-Unterträgers oder von Symbol-Unterträger-Frequenzen im Frequenzspektrum gibt.

**23.** Orthogonal-Frequenzmultiplex-Empfänger nach Anspruch 8 oder 9, bei welchem die Frequenzkorrektur-Einheit (16) die Amplitudendifferenzen von einer Mehrzahl von Null-Symbol-Unterträgern und einer Mehrzahl von Symbol-Unterträgern auf den jeweiligen Seiten von der Grenze zwischen einem Null-Symbol-Träger und einem Symbol-Träger misst, um eine Mittenposition des Frequenzspektrums zu beurteilen.

**24.** Orthogonal-Frequenzmultiplex-Empfänger nach Anspruch 23, bei welchem die Frequenzkorrektur-Einheit (16) die Summe von den Amplituden von einer Mehrzahl von Null-Symbol-Unterträgern bei Frequenzen unterhalb des Symbol-Träger-Frequenzbereichs mit der Summe von den Amplituden von einer Mehrzahl von Null-Symbol-Unterträgern bei Frequenzen oberhalb des Symbol-Träger-Frequenzbereichs vergleicht und die Frequenz auf die höhere Summenseite verschiebt.

**25.** Orthogonal-Frequenzmultiplex-Empfänger nach Anspruch 23, bei welchem die Frequenzkorrektur-Einheit (16) die Summe von den Amplituden von einer Mehrzahl von Symbol-Unterträgern bei Frequenzen unterhalb des Mittelpunktes des Symbol-Träger-Frequenzbereiches mit der Summe von den Amplituden von einer Mehrzahl von Symbol-Unterträgern bei Frequenzen oberhalb des Mittelpunktes des Symbol-Träger-Frequenzbereiches vergleicht und die Frequenz auf die höhere Summenseite verschiebt.

**26.** Orthogonal-Frequenzmultiplex-Empfänger nach Anspruch 23, bei welchem die Frequenzkorrektur-Einheit (16) die Summe von den Amplituden von einer Mehrzahl von Null-Symbol-Unterträgern bei Frequenzen unterhalb des Symbol-Träger-Frequenzbereiches mit der Summe von den Amplituden von einer Mehrzahl von Null-Symbol-Unterträgern bei Frequenzen oberhalb des Symbol-Träger-Frequenzbereiches vergleicht und die Frequenz auf die höhere Summenseite verschiebt, und ferner die Summe von den Amplituden von einer Mehrzahl von Symbol-Unterträgern bei Frequenzen unterhalb des Mittelpunktes des Symbol-Träger-Frequenzbereiches mit der Summe von den Amplituden von einer Mehrzahl von Symbol-Unterträgern bei Frequenzen oberhalb des Mittelpunktes des Symbol-Träger-Frequenzbereiches vergleicht und die Frequenz auf die höhere Summenseite verschiebt.

**27.** Orthogonal-Frequenzmultiplex-Empfänger nach Anspruch 24 oder 25, bei welchem die Frequenzkorrektur-Einheit (16) ferner die Frequenz um eine Größe verschiebt, welche proportional zu dem Ergebnis des Vergleiches von den Summen ist.

**28.** Orthogonal-Frequenzmultiplex-Empfänger nach Anspruch 8 oder 9, bei welchem die Frequenzkorrektur-Einheit (16) die Amplituden von einer Mehrzahl von Symbol-Unterträgern misst, welche um den Mittelpunkt des Symbol-Träger-Frequenzbereiches zentriert sind, und die Frequenzverschiebung beendet, wenn die Summe von den Amplituden kleiner als ein vorbestimmtes Ausmaß ist.

**29.** Orthogonal-Frequenzmultiplex-Empfänger nach Anspruch 8 oder 9, bei welchem die Frequenzkorrektur-Einheit (16) die Amplituden von einer Mehrzahl von Null-Symbol-Unterträgern unterhalb und/oder oberhalb des Frequenzbereiches von einem Symbol-Träger misst und die Frequenzverschiebung beendet, wenn es eine Änderung in der Amplitude innerhalb des einen oder der mehreren Frequenzbereiche der Null-Symbol-Unterträger gibt.

**Revendications**

**1.** Récepteur à multiplexage par répartition orthogonale de la fréquence pour recevoir un signal obtenu par modulation de phase d'une pluralité de sous-porteuses orthogonales, pourvu de :

un oscillateur commandé en tension (3) pour générer une porteuse locale pour reproduire un signal de bande de base à partir d'un signal reçu ;

une unité d'analyse de fréquence (8) pour trouver des amplitudes et des valeurs de phase des sous-porteuses en analysant la fréquence dudit signal de bande de base ; et

une unité de correction de fréquence (16) pour détecter la différence d'amplitude se produisant entre les sous-porteuses par une interférence entre symboles due à la déviation de fréquence de la porteuse locale par rapport à la fréquence côté émission et corriger la déviation de fréquence de ladite porteuse locale pour donner la différence d'amplitude minimale, où ladite unité de correction de fréquence (16) est adaptée pour comparer (S4) les amplitudes des sous-porteuses attenantes en utilisant la somme des différences d'amplitude pour chacune de deux sous-porteuses attenantes pour trouver (S5) une mesure de la différence de phase entre les sous-porteuses attenantes, pour détecter (S6) ladite déviation de fréquence de ladite porteuse locale basée à la fois sur ladite différence d'amplitude détectée et ladite mesure de la différence de phase, et pour commander (S7) la fréquence de ladite porteuse locale de sorte à donner la différence d'amplitude minimale en fonction de la grandeur de ladite déviation de fréquence détectée.

**2.** Récepteur à multiplexage par répartition orthogonale de la fréquence selon la revendication 1, pourvu en outre d'un circuit de jugement d'état de réception (16) pour juger l'état de réception selon la différence d'amplitude entre les sous-porteuses.

**3.** Récepteur à multiplexage par répartition orthogonale de la fréquence selon la revendication 1, dans lequel ladite unité de correction de fréquence (16) détecte la différence d'amplitude entre les sous-porteuses attenantes pour supprimer une détection erronée due aux différences d'amplitude provoquées par une perturbation par trajet multiple et décide qu'une déviation de fréquence s'est produite dans la porteuse locale.

**4.** Récepteur à multiplexage par répartition orthogonale de la fréquence selon la revendication 1, dans lequel ladite unité de correction de fréquence (16) corrige la déviation de fréquence de la porteuse locale de sorte à donner la somme la plus petite d'une pluralité de différences d'amplitude entre les sous-porteuses attenantes.

**5.** Récepteur à multiplexage par répartition orthogonale de la fréquence selon la revendication 4, dans lequel ladite unité de correction de fréquence (16) incrémente ou décrémente la déviation de fréquence de la porteuse locale, modifie la valeur de correction de l'étape suivante dans une direction où la somme des différences d'amplitude devient plus petite, puis répète ce programme.

**6.** Récepteur à multiplexage par répartition orthogonale de la fréquence selon la revendication 5, dans lequel ladite unité de correction de fréquence (16) rend la quantité de correction de la déviation de fréquence importante, lorsque la somme des différences d'amplitude est grande, et petite lorsque la somme est petite.

**7.** Récepteur à multiplexage par répartition orthogonale de la fréquence selon la revendication 1, dans lequel ladite unité de correction de fréquence (16) arrête la correction de la déviation de fréquence et maintient l'état avant la correction de fréquence lorsque la densité de puissance chute.

**8.** Récepteur à multiplexage par répartition orthogonale de la fréquence selon la revendication 4, dans lequel un taux d'erreur entier est trouvé à partir du signe obtenu au niveau de l'unité d'analyse de fréquence (8) et dans lequel ladite unité de correction de fréquence (16) décale la fréquence sur l'intervalle de fréquence df des sous-porteuses lorsque le taux d'erreur de trame dépasse une valeur prédéterminée.

**9.** Récepteur à multiplexage par répartition orthogonale de la fréquence selon la revendication 8, dans lequel ladite unité de correction de fréquence (16) corrige la déviation de fréquence de sorte que la somme des différences d'amplitude devient inférieure à une valeur prédéterminée, puis détecte le taux d'erreur de trame, si le taux d'erreur de trame est supérieur à une valeur prédéterminée, effectue successivement le décalage de fréquence de +df, -df, +2df, -2df, +3df, -3df, ... basé sur l'intervalle de fréquence df des sous-porteuses, et, après que le taux d'erreur de trame est devenu inférieur à une valeur prédéterminée, corrige de nouveau la déviation de fréquence de sorte que la somme des différences d'amplitude devient le minimum.

10. Récepteur à multiplexage par répartition orthogonale de la fréquence selon la revendication 9, dans lequel ladite unité de correction de fréquence (16) commande la correction en utilisant les décalages de fréquence successifs et la déviation de la fréquence comme quantités de rétroaction.

11. Récepteur à multiplexage par répartition orthogonale de la fréquence selon la revendication 8 ou 9, dans lequel l'unité de correction de fréquence (16) est adaptée pour décaler la fréquence sur l'intervalle de fréquence des sous-porteuses dans une direction basée sur la valeur moyenne du taux d'erreur de trame.

12. Récepteur à multiplexage par répartition orthogonale de la fréquence selon la revendication 8 ou 9, qui augmente l'intervalle de temps entre les ajustements du décalage de fréquence lorsque le taux d'erreur de trame est inférieur à un seuil prédéterminé.

13. Récepteur à multiplexage par répartition orthogonale de la fréquence selon la revendication 8 ou 9, dans lequel l'unité de correction de fréquence (16) est adaptée pour arrêter la correction du décalage de fréquence et maintient l'état avant la correction de fréquence si le taux d'erreur de trame chute d'une quantité extrême.

14. Récepteur à multiplexage par répartition orthogonale de la fréquence selon la revendication 1, dans lequel ladite unité de correction de fréquence (16) juge que la déviation de fréquence est petite lorsque la différence de phase entre les sous-porteuses attenantes est inférieure à un seuil prédéterminé et que l'amplitude de la sous-porteuse spécifique est inférieure à l'amplitude de la sous-porteuse attenante, tandis qu'elle juge que la déviation de fréquence est grande lorsque la différence de phase entre les sous-porteuses attenantes est supérieure à un seuil prédéterminé et que l'amplitude de la sous-porteuse spécifique est supérieure à l'amplitude de la sous- porteuse attenante.

15. Récepteur à multiplexage par répartition orthogonale de la fréquence selon la revendication 14, dans lequel la différence de phase entre les sous-porteuses attenantes est trouvée par une comparaison du produit, $Vd^*D_+$ et $Vd^*D_-$ avec la différence d'amplitude Vd entre la sous-porteuse spécifique et une sous-porteuse attenante ainsi que les distances $D_+$ et $D_-$ entre la sous-porteuse spécifique et les deux sous-porteuses attenantes.

16. Récepteur à multiplexage par répartition orthogonale de la fréquence selon la revendication 14, dans lequel la différence de phase entre les sous-porteuses attenantes est trouvée comme étant la différence des sommes de produits des distances $D_+i_0$ et $D_-i_0$ pour la sous-porteuse spécifique $i_0$ et une pluralité de sous-porteuses par rapport à la différence d'amplitude $Vdi_0$ entre la sous-porteuse spécifique $i_0$ et les sous-porteuses attenantes, à savoir,

$$\sum_{i \ne i_0} Vdi_0 \cdot D_+ i_0 - \sum_{i \ne i_0} Vdi_0 \cdot D_- i_0$$

$$(i : \texttt{nombre de sous-porteuses})$$

et juge la déviation de fréquence comme étant positive si la différence est positive et la déviation de fréquence comme étant négative si la différence est négative.

17. Récepteur à multiplexage par répartition orthogonale de la fréquence selon la revendication 16, dans lequel l'unité de correction de fréquence (16) commande la correction en utilisant la déviation de fréquence positive et la déviation de fréquence négative, comme quantités de rétroaction.

18. Récepteur à multiplexage par répartition orthogonale de la fréquence selon la revendication 8 ou 9, dans lequel l'unité de correction de fréquence (16) utilise comme référence une position centrale d'un spectre de fréquence d'une pluralité de sous-porteuses en tant que direction de déviation de fréquence.

19. Récepteur à multiplexage par répartition orthogonale de la fréquence selon la revendication 18, dans lequel l'unité de correction de fréquence (16) mesure toutes les amplitudes des sous-porteuses de symbole nul et toutes les amplitudes des sous-porteuses de symbole de sorte à juger une position centrale du spectre de fréquence.

20. Récepteur à multiplexage par répartition orthogonale de la fréquence selon la revendication 19, dans lequel l'unité de correction de fréquence (16) juge une position centrale du spectre de fréquence basée sur une différence de niveau avec une sous-porteuse attenante supérieure à un seuil prédéterminé.

21. Récepteur à multiplexage par répartition orthogonale de la fréquence selon la revendication 19, dans lequel l'unité de correction de fréquence (16) juge une position centrale du spectre de fréquence basée sur une amplitude moyenne d'une pluralité de sous-porteuses consécutives.

22. Récepteur à multiplexage par répartition orthogonale de la fréquence selon la revendication 19, dans lequel l'unité de correction de fréquence (16) arrête la recherche de la position centrale du spectre de fréquence lorsqu'une modification d'amplitude se produit dans les fréquences des sous-porteuses de symbole nul ou des sous-porteuses de symbole dans le spectre de fréquence.

23. Récepteur à multiplexage par répartition orthogonale de la fréquence selon la revendication 8 ou 9, dans lequel l'unité de correction de fréquence (16) mesure les différences d'amplitude d'une pluralité de sous-porteuses de symbole nul et d'une pluralité de sous-porteuses de symbole sur les côtés respectifs de la frontière entre une porteuse de symbole nul et une porteuse de symbole de sorte à juger une position centrale du spectre de fréquence.

24. Récepteur à multiplexage par répartition orthogonale de la fréquence selon la revendication 23, dans lequel ladite unité de correction de fréquence (16) compare la somme des amplitudes d'une pluralité de sous-porteuses de symbole nul à des fréquences inférieures à la plage de fréquences de porteuses de symbole avec la somme des amplitudes d'une pluralité de sous-porteuses de symbole nul à des fréquences supérieures à la plage de fréquences de porteuses de symbole et décale la fréquence vers le côté où la somme est plus grande.

25. Récepteur à multiplexage par répartition orthogonale de la fréquence selon la revendication 23, dans lequel ladite unité de correction de fréquence (16) compare la somme des amplitudes d'une pluralité de sous-porteuses de symbole à des fréquences inférieures au point milieu de la plage de fréquences de porteuses de symbole avec la somme des amplitudes d'une pluralité de sous-porteuses de symbole à des fréquences supérieures à la plage de fréquence de porteuses de symbole de point milieu et décale la fréquence vers le côté où la somme est plus grande.

26. Récepteur à multiplexage par répartition orthogonale de la fréquence selon la revendication 23, dans lequel ladite unité de correction de fréquence (16) compare la somme des amplitudes d'une pluralité de sous-porteuses de symbole nul à des fréquences inférieures à la plage de fréquences de porteuses de symbole avec la somme des amplitudes d'une pluralité de sous-porteuses de symbole nul à des fréquences supérieures à la plage de fréquence de porteuses de symbole et décale la fréquence vers le côté où la somme est plus grande et compare en outre la somme des amplitudes d'une pluralité de sous-porteuses de symbole à des fréquences inférieures au point milieu de la plage de fréquence de porteuses de symbole avec la somme des amplitudes d'une pluralité de sous-porteuses de symbole à des fréquences supérieures à la plage de fréquences de porteuses de symbole de point milieu et décale la fréquence vers le côté où la somme est plus grande.

27. Récepteur à multiplexage par répartition orthogonale de la fréquence selon la revendication 24 ou 25, dans lequel ladite unité de correction de fréquence (16) décale en outre la fréquence d'une quantité proportionnelle au résultat de la comparaison des sommes.

28. Récepteur à multiplexage par répartition orthogonale de la fréquence selon la revendication 8 ou 9, dans lequel ladite unité de correction de fréquence (16) mesure les amplitudes d'une pluralité de sous-porteuses de symbole centrées autour du point milieu de la plage de fréquences de porteuses de symbole et arrête le décalage de fréquence lorsque la somme des amplitudes est inférieure à une étendue prédéterminée.

29. Récepteur à multiplexage par répartition orthogonale de la fréquence selon la revendication 8 ou 9, dans lequel ladite unité de correction de fréquence (16) mesure les amplitudes d'une pluralité de sous-porteuses de symbole nul inférieures et/ou supérieures à la plage de fréquences d'une porteuse de symbole et arrête le décalage de fréquence lorsqu'une modification d'amplitude se produit dans une ou plusieurs plages de fréquences des sous-porteuses de symbole nul.

Fig.1

# Fig.2

# Fig.3

# Fig.4

```
┌─────────────────┐
│     START       │── S1
└─────────────────┘
         │
         ▼
┌─────────────────┐
│ DETECTED ERROR  │── S2
│ RATE IS INPUT   │
└─────────────────┘
         │
         ▼
┌─────────────────┐
│ DETECTED FIELD  │── S3
│ STRENGTH IS     │
│ INPUT           │
└─────────────────┘
         │
         ▼
┌─────────────────┐
│ LEVELS OF       │── S4
│ SUBCARRIERS     │
│ ARE COMPARED    │
└─────────────────┘
         │
         ▼
┌──────────────────────┐
│ CORRELATION OF INTER │── S5
│ SYMBOL DISTANCE IS   │
│ FOUND                │
└──────────────────────┘
         │
         ▼
┌──────────────────────┐
│ FREQUENCY DEVIATION  │── S6
│ IS DETECTED          │
└──────────────────────┘
         │
         ▼
┌──────────────────────┐
│ FREQUENCY DEVIATION  │── S7
│ IS CORRECTED         │
└──────────────────────┘
```

Fig.5

(a)

(b)

$\ell_1$

$\ell_2$

$\ell_3$

$\ell_3$

$\ell_2$

$\ell_1$

# Fig.6

(a) fd>0 → Vd·D-< Vd·D+

(b) fd<0 → Vd·D->Vd·D+

# Fig.7

# Fig.8

# Fig.9

POINTS HAVING LARGE LEVEL
DIFFERENCE ARE FOUND TO
DETERMINE A POSITION

# Fig.10

LEVELS OF HIGH AVERAGE ARE
FOUND TO DETECT A POSITION

# Fig.11

LEVEL

FREQUENCY

SPECIFIC POINT

# Fig.12

LEVEL

NULL SYMBOL
CARRIER

SYMBOL CARRIER

NULL SYMBOL
CARRIER

FREQUENCY

LEVEL
MEASUREMENT

LEVEL
MEASUREMENT

# Fig.13

ACTUAL SPECTRUM

SPECTRUM BEING MEASURED

LEVEL

SYMBOL CARRIER

NULL SYMBOL CARRIER

FREQUENCY

MEASURING POSITION

MEASURING POSITION

SHIFT

# Fig.14

ACTUAL SPECTRUM

SPECTRUM BEING MEASURED

LEVEL

FREQUENCY

MEASURING POSITION

MEASURING POSITION

SHIFT

# Fig.15

—— ACTUAL SPECTRUM

---- SPECTRUM BEING
MEASURED

LEVEL

FREQUENCY

MEASURING
POSITION
OF Fig.13

MEASURING
POSITION
OF Fig.14

MEASURING
POSITION
OF Fig.13

——→ SHIFT

# Fig.16

SMALL SHIFTING IF
DIFFERENCE IS SMALL

————ACTUAL SPECTRUM

————SPECTRUM BEING
MEASURED

LEVEL

MEASURING
POSITION

MEASURING
POSITION

FREQUENCY

LARGE SHIFTING IF
DIFFERENCE IS LARGE

MEASURING
POSITION

MEASURING
POSITION

FREQUENCY

# Fig.17

LEVEL

FREQUENCY

MEASUREMENT AT
CENTER REGION

# Fig.18

LEVEL

FREQUENCY

ACCURATE MEASUREMENT
IS NOT POSSIBLE IF
SPECIFIC POINTS EXIST

# Fig.19

# Fig.20

# Fig.21

# Fig.22

**EP 0 998 085 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10209999 A